# EUROPEAN PATENT APPLICATION

(11) **EP 2 249 242 A2**
(43) Date of publication of application: **10.11.2010**
(21) Application number: 10161995.5
(22) Date of filing: 05.05.2010
(51) Int. Cl.: G06F 3/048

(54) **Apparatus and method for displaying menu items**

(30) Priority: 05.05.2009 US 435413
(71) Applicant: Else Ltd, 43662 Isreal (IL)
(72) Inventor: Reifman, Eli, 43662, Ra'ianana (IL); Vonshak, Itai, Tel Aviv (IL); Rapaport, Alex, 245, ISRAEL (IL)
(74) Representative: Croston, David

(57) **Abstract**

In a hand-held device, a graphic user interface (GUI), comprising an active area in which a selected one or more items is displayed, said selected one or more items can be manipulated when displayed in said active area. The GUI also comprises a grid displaying non-selected items, wherein at least one row in the grid contains two or more items, wherein the items in the active area and the grid are displayed in an order maintained when a new item is selected and replaces the one or more items in the active area. Another GUI may combine a grid and one or more rows displaying items in a list arrangement.

## Description

### BACKGROUND OF THE INVENTION

### FIELD OF THE INVENTION

The present invention relates to display methods in general and to display menu items in circular menus in particular.

### DISCUSSION OF THE RELATED ART

Display of items or objects in menus within computerized devices plays an important role in the interface provided to users who use the computerized device. Such role is significant in the technological and commercial aspects of the computerized device, and enables efficient activation of the device and elegant browsing between the menu items.

These display abilities are more significant in hand-held devices, especially devices that comprise touch screens. For example, Iphone provides its users with the ability to browse between images or other media files or folders by moving a finger or thumb over the screen. Touch screens are widely used in hand-held devices, which are smaller, to allocate more room for the screen, instead of the button's area. As such, the users browse menu items and activate the hand held device by a pointing device, such as the finger, thumb or pen-like pointing device used in Personal Digital Assistance (PDA) devices. Many hand-held devices are operated single-handedly by the user. In such manner, the user holds the hand-held device with her palm, and grasps the device with the four fingers - index finger, middle finger, ring finger and the little finger. The user operates the hand-held device with her thumb. For example, selecting applications or functions, browsing menus, ringing, inputting text and the like.

When displaying items in a grid arrangement, such as a photo album, it is often desired to select one item and display the selected item in an active area in which the item can be manipulated. When the user replaces the item in the active area, and the other items are arranged in a grid of lines or columns below and above the active area, there are a few disadvantages. For example, when a new object is to be inserted into the active area, all the other items should move to another area in the grid in order to maintain the order of the items. Such order is determined according to a parameter, such as file number, size, type and the like. Movement of all the items is inconvenient to the user, tiresome to the user and requires resources to change the image dramatically. Further, in case the size of some items in the grid is different from the size of others, those items cannot replace an item selected and moved to the active area, and cannot maintain the order of items in the grid. Further, known methods do not enable display of lines having a different number of items in the grid.

It is desired to provide a new method and arrangement of items in a grid having an active area where items can be manipulated.

### SUMMARY OF THE PRESENT INVENTION

It is an object of the subject matter to disclose a graphic user interface (GUI) used in a hand-held device. The GUI comprises an active area in which a selected one or more items is displayed, said selected one or more items can be manipulated when displayed in said active area. The GUI further comprises a grid displaying non-selected items, wherein at least one row in the grid contains two or more items, wherein the items in the active area and the grid are displayed in an order maintained when a new item is selected and replaces the one or more items in the active area.

In some embodiments, the items in the grid are arranged according to an identification value. In some embodiments, the items having an identification value higher than the value of the selected item are displayed in a predetermined portion of the grid.

In some embodiments, the grid comprises an area displaying items having identification value higher than the value of the selected item. In some embodiments, the grid comprises an area displaying items having identification value lower than the value of the selected item. In some embodiments, the size of at least one of the items displayed in the grid is different from the size of another item in the grid.

It is another object of the subject matter to disclose a method of arranging items in a grid display, the method comprises receiving a selection from a user concerning one or more selected items, displaying the one or more selected items in an active area, such that only the one or more selected items can be manipulated by a user, and maintaining a sequential order of the items displayed in the grid and the items displayed in the active area after displaying the one or more selected items in the active area.

In some embodiments, items are displayed in the grid in the same row or the same column as before the selection of the one or more selected items. In some embodiments, items are arranged according to an identification value.

It is an object of the subject matter to disclose a graphic user interface (GUI) used in a hand-held device. The GUI comprises an active area in which a selected one or more items is displayed, said selected one or more items can be manipulated when displayed in said active area. The GUI also comprises a grid displaying non- selected items, wherein at least one row in the grid contains two or more items, and at least one row containing at least one item such that one item is displayed in each row in a list arrangement.

### BRIEF DESCRIPTION OF THE DRAWINGS

Exemplary non-limited embodiments of the disclosed subject matter will be described, with reference to the following description of the embodiments, in conjunction with the figures. The figures are generally not shown to scale and any sizes are only meant to be exemplary and not necessarily limiting. Corresponding or like elements are optionally designated by the same numerals or letters.
Figure 1 shows a hand-held device, according to exemplary embodiments of the subject matter;
Figure 2 shows menu items arranged and displayed on a hand-held device, in accordance with some exemplary embodiments of the subject matter; and,
Figure 3 shows a flow of displaying in a grid, in accordance with some exemplary embodiments of the subject matter.

### DETAILED DESCRIPTION OF THE PREFERRED EMBODIMENTS

One technical problem addressed by the subject matter is that known methods and arrangements of displaying menu items in grid do not provide any sequential order between the items. Further, known arrangements do not enable manipulation of images in a grid without opening the image, for example in another window. Further, known graphic user interfaces do not enable manipulating an item within a grid in a single-hand operation environment. moreover, Further, such grid arrangement does not provide for enlargement of one item, on which the user can perform manipulations, such as rotations, zoom-in and others, while the manipulations can only be performed on a selected item, to reduce mistakes probability.

One technical solution is a new display arrangement of menu items, a method of positioning menu items and a computer software product that implements the same. The arrangement provides for one or more selected items on which the user can perform manipulations. The selected items are located in an active area. The arrangement provides for a sequential display of items, such as items are arranged in both list and a grid. When items are listed according to size, name, type and others, the items located before and after the selected items are arranged in grid. As such, although displayed as a grid, the grid provides interface similar to a list, arranged from top to bottom, enable sequential scroll between items, and maintain the items order.

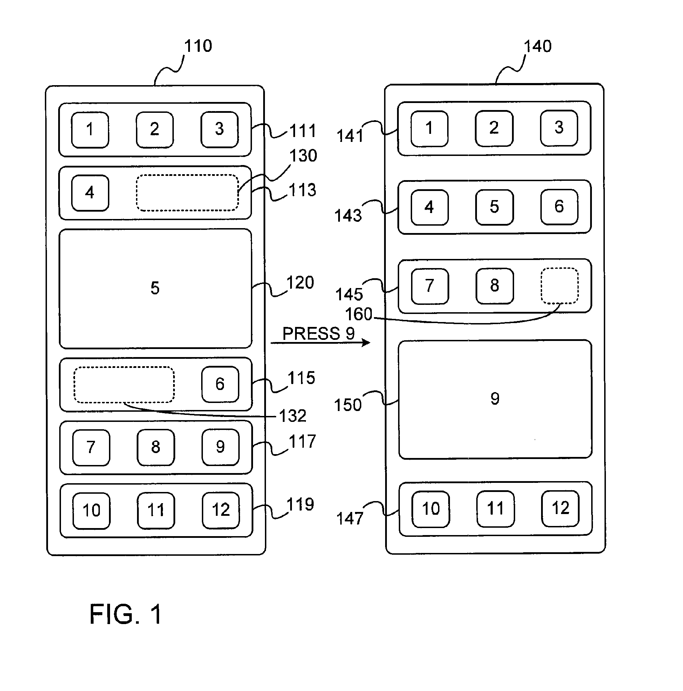

Figure 1 shows a display of items in a hand-held device, according to exemplary embodiments of the subject matter. Display 110 provides a grid arrangement of items 1-12. According to the example described below, three items are displayed in each row, such as rows 111, 113, 115, 117 and 119. Such rows contain items in a passive mode that cannot be manipulated by the user. The user can perform manipulations on one or more selected items, displayed in active area 120. The user may determine the number of selected items displayed in the active area 120. Further, the size of the active area may change according to the number of selected items. In display 110, the selected item is item number 5. The user can select other items to be in the active area 120. Items outside the active area 120 are accessible for activation, to be inserted into the active area 120, and cannot be manipulated outside said active area 120.

In some exemplary embodiments of the disclosed subject matter, the items in the grid arrangement are arranged by a specific order. Such order may be predetermined or determined by the user. Such order may be a function of item type, item size, date modified or another parameter desired by a person skilled in the art. Once the user selects an item to be active, the selected item can be manipulated, and the other items are arranged in a grid manner according to the specific order noted above. For example, each item receives an ID according to which the items are ordered. When item 5 is selected to be displayed in the active area 120, items 1-3 are displayed in first line 111, item 4 is displayed in second line 113, the active area 120 is located between the second line 113 and third line 115, and contains item 5. Item 6 is displayed in third line 115, items 7-9 are displayed in fourth line 117 and items 10-12 are displayed in fifth line 119. As such, when item 5 is selected, and is in the middle of a line that contains items 4 and 6 in a three items per line configuration, item 4, the item previous to the selected item, is displayed in a line above the active area 120 and item 6, the item after the selected item, is displayed in the next line. As a result, the order and sequence between the items are maintained, while the items are displayed in a grid manner. In another example, item 6 maintains the right location of line 115 also when item number 9 is selected to be displayed in active area 150 of display 140.

Display 140 contains selected item 9. Other items are also arranged in three items in each line. The number of items in each line or column may vary according to many parameters, such as the item type, application and the like. Items 1-3 of display 140 are displayed in first line 141, items 4-6 are displayed in second line 143, items 7-8 are displayed in third line 145 and items 10-12 are displayed in fourth line 147. The number of lines used to display the items in grid may change according to the selected item. As such, displaying items 1-12 in display 110 requires five lines in addition to the active area 120, while display 140 requires only four lines since the selected item of display 110 is the center item of the line, item 5. The user may select items using s touch screen application, or browse between items using arrows. In some exemplary embodiments, the non-selected items, namely items 1-8 and 10-12 of display 140, are arranged in a grid, such that the items having ID higher than the ID of the selected item are displayed above the active area and items having ID lower than the ID of the selected item are displayed under the active area. The ID may be provided by the application, by the user or by any source desired by a person skilled in the art. The ID may be random or selected by the hand held device without contextual reference to any characteristics of the items. In some cases, a computerized application that determines the arrangement of the items in the grid does not use any identification value to arrange the items, or arranged in any method desired by a person skilled in the art. Area 130 in line 113 of display 110 does not contain any items. The space of area 130 was allocated to items 5 and 6. Similarly, the space of area 132 in line 115 is allocated since item 5 is displayed in active area 120 and as a result, item4 is displayed in the line 113. It should be noted that areas 130, 132 might represent an item sized double than the size of item 4 and still maintain the order of items in the grid when the large-sized item is selected to the active area 120. Similarly, area 160 of display 130 represents the area allocated to item 9 displayed in the active area 150. Once another item is selected into active item 150, item 9 is displayed back in line 145, in the previous location and maintains the same location in which the item was displayed before being selected. In some exemplary embodiments of the disclosed subject matter, all items maintain at least the Y-axis location or X-axis location when the user selects an item.

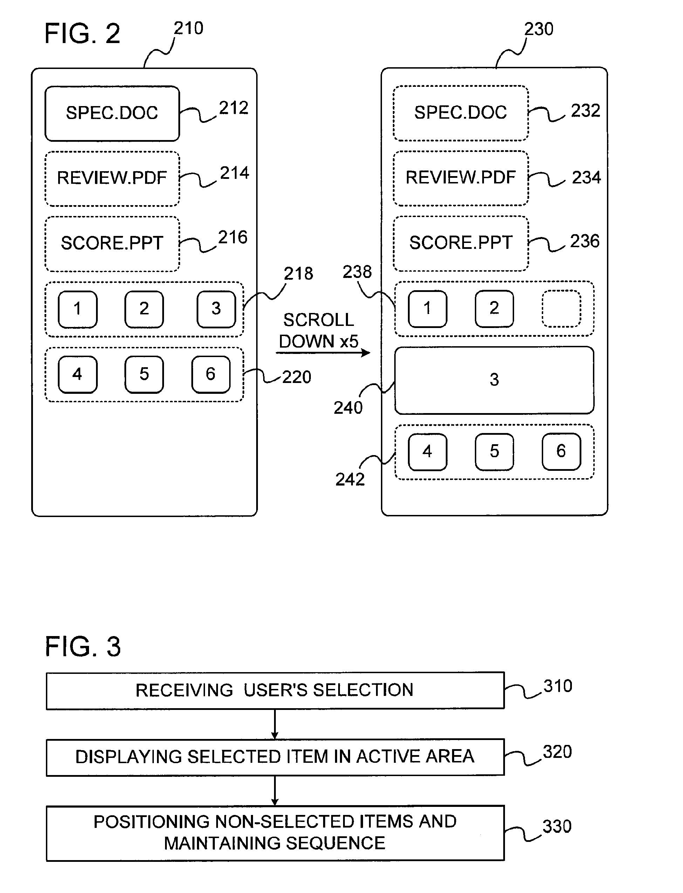

Figure 2 shows menu items arranged and displayed on a hand-held device, in accordance with some exemplary embodiments of the subject matter. Figure 2 shows a display 210 and a display 230. Both display 210 and 230 provide the user with items represented by media items and by text. For example, some file names represent text files, such as spec.doc displayed in line 212, which represents a word document, review.pdf displayed in line 214 and score.ptt displayed in line 216. Other items, such as media items, are stored in a grid, having at least two media items in each line, such as lines 218 and 220. The grid may contain only one item in a line, as long as the item in the active area was displayed in the same line before selected. As such, figure 2 provides for a combined display of both sequence of text lines as shown in lines 212, 214 and 216, and a grid display used for displaying media items, such as items 1-6 displayed in lines 218, 220. Such media items may be images, audio files, video files and the like. Alternatively, some text items may be represented using media and displayed in a grid. Line 212 is an active area, enabling the user to perform manipulations on the item represented by that line. Line 232 of display 230, which is equivalent to line 212 of display 230, is not active. The active area of display 230 is area 240, determined upon the selection of item 5. Such combination of list of text representations of items and grid representations enables comfort display of text, and provides more media items to be displayed in a grid.

Further, in some cases, there may be more than one list, then a grid, for example 3 rows of a grid, then another list and finally another grid, such that the user can view items according to the representation, text or media item. The items may be ordered according to an identification value as disclosed in figure 1, according to a parameter as disclosed above. When the user scrolls. The lines maintain their shape as shown in lines 232, 234 and 236 of display 230 when the user selects another item. Item 3 is the selected item of display 230 and is displayed in active area 240. As such, other items previously displayed in the same line ()line 220 of display 210) are no displayed in the line 242 located below the active area 240.

Figure 3 shows a flow of displaying in a grid, in accordance with some exemplary embodiments of the subject matter. In step 310, a computerized application within the hand-held device receives the user's selection of one or more items to be manipulated. Receipt of the user's selection may be performed by an I/O module residing in the hand-held device. The user's selection may be performed by pointing at the selected item, by browsing between items until the selected item is browsed, and the like. In step 320, the selected items are displayed in the active area. The active area may have a size bigger than the size of areas within the grid. In some exemplary embodiments of the disclosed subject matter, each area in the grid contain one item. In some cases, the location of the active area changes according to the selected item. For example, when the user selects item 9, three lines of items are displayed above the active items. Previous to said selection, only two lines were displayed above the active area. If it is desired to maintain the location of the active area, the computerized application within the device displaying the items may change the number of items per line, the size of items and the like.

In step 330, the items not selected by the user are positioned in the display in a manner that maintains the sequence of all items. Such sequence may be a function of an identification value, or another parameter, such as an item name, item type, item size and the like. At least the row or the column of all items are maintain when a new item is selected and displayed in the active area. The location of the items in the X-axis or the Y-axis is maintained after selection of an item. For example, when an item belonging to a specific row is selected and displayed in the active area, the rest of the items in the specific row are displayed in the same column as were displayed before the selection. Further, in some exemplary embodiments of the disclosed subject matter, the order of the items is maintained after selection of an item, such that there is a predefined area allocated for items having an identification value higher than the value of the selected item.

As will be appreciated by one skilled in the art, the disclosed subject matter may be embodied as a system, method or computer program product. Accordingly, the disclosed subject matter may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CDROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, and the like.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. In a hand-held device, a graphic user interface, comprising:
an active area in which a selected one or more items is displayed, said selected one or more items can be manipulated when displayed in said active area;
a grid displaying non-selected items, wherein at least one row in the grid contains two or more items;
wherein the items in the active area and the grid are displayed in an order
maintained when a new item is selected and replaces the one or more items in the active area.

2. The graphic user interface of claim 1, wherein the items in the grid are arranged according to an identification value.

3. The graphic user interface of claim 1, wherein the items having an identification value higher than the value of the selected item are displayed in a predetermined portion of the grid.

4. The graphic user interface of claim 1, wherein the grid comprises an area displaying items having identification value higher than the value of the selected item.

5. The graphic user interface of claim 1, wherein the grid comprises an area displaying items having identification value lower than the value of the selected item.

6. The graphic user interface of claim 1, wherein the size of at least one of the items displayed in the grid is different from the size of another item in the grid.

7. A method of arranging items in a grid display, the method comprises:
receiving a selection from a user concerning one or more selected items;
displaying the one or more selected items in an active area, such that only the one or more selected items can be manipulated by a user;
maintaining a sequential order of the items displayed in the grid and the items displayed in the active area after displaying the one or more selected items in the active area.

8. The method according to claim 7, wherein the items displayed in the grid in the same row or the same column displayed before the selection of the one or more selected items.

9. The method according to claim 7, wherein the items are arranged according to an identification value.

10. In a hand-held device, a graphic user interface, comprising:
an active area in which a selected one or more items is displayed, said selected one or more items can be manipulated when displayed in said active area;
a grid displaying non- selected items, wherein at least one row in the grid contains two or more items;
at least one row containing at least one item such that one item is displayed in each row in a list arrangement.
